# NEW EUROPEAN PATENT SPECIFICATION

(11) **EP 1 476 300 B2**
(45) Date of publication and mention of the opposition decision: **13.07.2016**
(45) Mention of the grant of the patent: 06.04.2011
(21) Application number: 03739752.8
(22) Date of filing: 11.02.2003
(51) Int. Cl.: B32B 17/10, C03C 17/34, C03C 17/36, C23C 14/08, G02B 5/26, G02B 5/28, G02B 1/11, G02B 5/20

(54) **SOLAR CONTROL COATING**
SONNENSCHUTZBESCHICHTUNG
REVÊTEMENT CONTRE LE SOLEIL

(30) Priority: 11.02.2002 US 355912 P; 11.02.2003 US 364089
(43) Date of publication of application: 17.11.2004
(73) Proprietor: PPG Industries Ohio, Inc., Cleveland, OH 44111 (US)
(72) Inventor: FINLEY, James J., Pittsburgh, PA 15238 (US); THIEL, James P., Pittsburgh, PA 15223-1218 (US); BUHAY, Harry, Allison Park, PA 15101 (US)
(74) Representative: f & e patent
(86) International application number: PCT/US2003/004127
(87) International publication number: WO 2003/068500

(56) References cited:
- EP-A- 0 599 071
- WO-A-01/38248
- WO-A1-00/37384
- WO-A1-01/38248
- WO-A1-90/08334
- DE-A- 10 039 412
- DE-A1- 2 057 713
- US-A- 4 610 771
- US-A- 5 071 206
- US-A- 5 942 338
- US-A- 5 942 338

## Description

### BACKGROUND OF THE INVENTION

### 1. Field of the Invention

This invention relates generally to multi-layered coatings and, in one embodiment, to a multi-layered solar control coating having improvements in areas such as reflectance, heat stability, mechanical durability, and chemical durability characteristics.

### 2. Description of the Currently Available Technology

The use of high transmittance, low emissivity coatings on glass panels for buildings, vehicles, and other structures is well known for controlling the amount of solar radiation passing through the panels. Low emissivity coatings allow short wavelength energy, e.g., visible or ultraviolet energy, to pass through the coating but reflect long wavelength energy, e.g., infrared energy. Such coatings are attractive for architectural and vehicle use since they reduce the costs of heating and/or cooling and, hence, conserve energy.

These known coatings typically include an infrared reflecting metallic layer sandwiched between two dielectric layers of metal oxides to reduce the visible reflectance. For example, U.S. Patent No. 4,898,790 discloses a multi-layered, high transmittance, low emissivity coating having a metallic silver film sandwiched between two zinc stannate films. U.S. Patent No. 4,898,789 discloses a multi-layered, high transmittance, low emissivity film having two infrared reflective metal films alternatingly combined with three metal oxide anti-reflective films. As a general rule, the thicker the infrared reflective film, the lower will be the emissivity of the coating. Similarly, increasing the number of infrared reflective films also lowers the coating emissivity. However, while increasing the thickness and/or number of infrared reflecting films decreases emissivity, it also affects the other characteristics of the coating, such as color, angular color shift, heat stability, chemical durability, mechanical durability, and visible reflectance. For example, increasing the number and/or thickness of the infrared reflective films typically decreases visible light transmission. Thus, it is not possible simply to add additional infrared reflecting films and dielectric films to a coating stack without significantly changing the transmission characteristics and solar performance properties of the coated article. This is particularly true in coated glass destined for use in the automotive field where the transmittance is controlled by government regulations. Also it has been found by the inventors that coating stacks with double infrared reflecting films each sandwiched between dielectric films are generally softer than comparable single infrared reflecting film stacks. The latter are coating stacks with one film or layer of infrared reflecting material sandwiched between dielectric films where any other films that are present would also be present in the double infrared reflecting film coating stack. Additionally, many low emissivity coatings break down or deteriorate upon heating to temperatures in the range of conventional glass processing temperatures, such as for bending, annealing, tempering, or laminating.

While these known coatings are adequate for conventional automotive use, it would be advantageous to provide a low emissivity or solar control coating that improves upon at least some of the characteristics of the known coatings. For example, it would be advantageous to provide a coating that has lower visible light reflectance than known coatings. It would also be advantageous to provide a low emissivity or solar control coating having reduced angular color shift compared to known coatings. Moreover, it would be advantageous to provide a solar control coating that could be applied to a substrate and subsequently heat treated at elevated temperatures to bend or shape the substrate without adversely affecting the solar control properties of the coating; and where heating improves the coating properties. It would further be advantageous to provide a coating having improved chemical durability and/or mechanical durability while maintaining a desirable level of solar control activity. It would also be advantageous to provide a coating having improved, e.g., higher, visible light transmittance while maintaining or surpassing the solar control characteristics of known solar control coatings.

### SUMMARY OF THE INVENTION

The present invention relates to a transparent substrate according to claim 1, a method of coating a transparent substrate according to claim 7 and a coated article according to claim 8.

The coating can have a high visible light transmittance (Lta), e.g., greater than or equal to 60%, such as greater than or equal to 70%, e.g., greater than or equal to 72%, e.g., greater than or equal to 75%. Additionally the coating has a neutral color. The coating has an a* and b* less than or equal to ± |3|, such as less than or equal to ± |2|, and an L* less than or equal to 50, e.g., less than or equal to 44, such as less than or equal to 40, e.g., less than or equal to 36, e.g., less than or equal to 35, such as less than or equal to 33. Additionally, the coating can have a total solar energy reflectance (TSER) over the range of 300 nanometers (nm) to 2150 nm of 20% to 50% (using a trapezoidal integration system). Moreover, the coating can have a low visible light reflectance, such as less than or equal to 5% above the visible light reflectance of the the substrate upon which it is deposited, e.g., less than or equal to 2%, e.g., less than or equal to 1%. In one embodiment, the infrared reflectance films can each have a sheet resistance in the range of 4.5 to 10 Ω/□. In another embodiment the triple coating on glass can result in a sheet resistance for the coating on glass in the range of 1.5 to 3.5 Ω/□. The thickness of each infrared reflective film can be the same or different in the coating stack. Generally the total amount of the metal for all three of the infrared reflecting films is greater than the amount of metal for all of the infrared reflecting films in commercially available double silver infrared reflecting coatings which give a luminous transmission of greater than at least 65 and more appropriately 70 percent or greater.

A coating of the invention comprises a first anti-reflective layer, comprising a metal oxide film, which is a zinc oxide film, deposited over a metal alloy oxide film, which is a zinc stannate film; a first infrared reflective metallic film comprising silver deposited over the first anti-reflective layer; a second anti-reflective layer deposited over the first infrared reflective film and comprising a first metal oxide film, which is a zinc oxide film, a metal alloy oxide film, which is a zinc stannate film, deposited over the first zinc oxide film, and a second metal oxide film, which is another zinc oxide film, deposited over the zinc stannate film; a second infrared reflective metallic film comprising silver deposited over the second anti-reflective layer; a third anti-reflective layer deposited over the second infrared reflective metallic film and comprising a first metal oxide film, which is a zinc oxide film, a metal alloy oxide film, which is a zinc stannate film, deposited over the first zinc oxide film, and a second metal oxide film, which is a zinc oxide film, deposited over the zinc stannate film; and a third infrared reflective metallic film comprising silver deposited over the third anti-reflective layer with the further features of claim 1.

### BRIEF DESCRIPTION OF THE DRAWINGS

Fig. 1 is a side view (not to scale) of a coated article having a coating incorporating features of the invention; and
Fig. 2 is a side view (not to scale) of a laminated article incorporating features of the invention.

### DESCRIPTION OF THE PREFERRED EMBODIMENTS

As used herein, spatial or directional terms, such as "inner", "outer", "left", "right", "up", "down", "horizontal", "vertical", and the like, relate to the invention as it is shown in the drawing figures. However, it is to be understood that the invention can assume various alternative orientations and, accordingly, such terms are not to be considered as limiting. Moreover, all ranges disclosed herein are to be understood to encompass any and all subranges subsumed therein. For example, a stated range of "1 to 10" should be considered to include any and all subranges between (and inclusive of) the minimum value of 1 and the maximum value of 10; that is, all subranges beginning with a minimum value of 1 or more and ending with a maximum value of 10 or less, e.g., 5.5 to 10. Also, as used herein, the terms "deposited over", "applied over", or "provided over" mean deposited, applied, or provided on but not necessarily in contact with the surface. For example, a material "deposited over" a substrate does not preclude the presence of one or more other materials of the same or different composition located between the deposited material and the substrate.

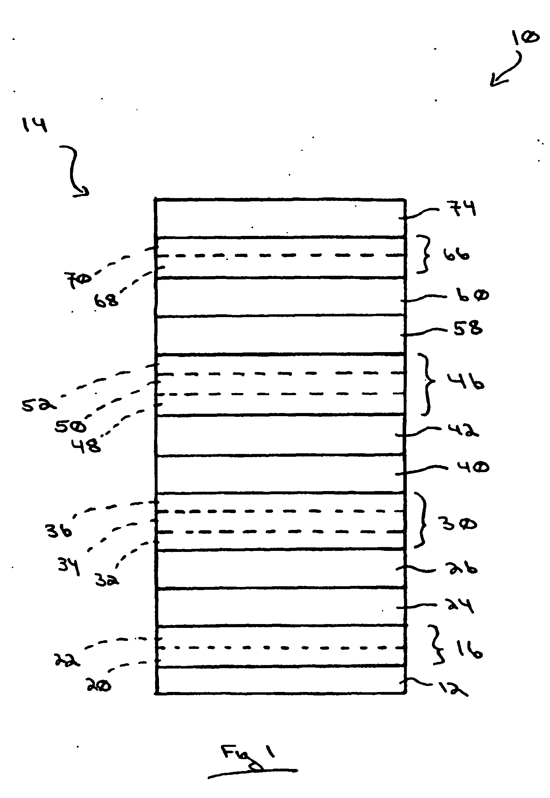

Fig. 1 illustrates a coated article 10 having a substrate 12 with a multi-layered coating 14 of the invention deposited over at least a portion of the substrate 12, e.g., over at least a portion of a major surface of the substrate 12.

The substrate 12 is transparent to visible light. By "transparent" is meant having a transmittance through the substrate 12 of greater than 0% up to 100%. By "visible light" is meant electromagnetic energy in the range of 390 nm to 800 nm. Suitable transparent materials include plastic (e.g., polymethylmethacrylate, polycarbonate, polyurethane, polyethyleneterephthalate (PET), or copolymers of any monomers for preparing these, or mixtures thereof), Mylar sheet or film, ceramic, or glass. The glass can be of any type, such as conventional float glass or flat glass, and can be of any composition having any optical properties, e.g., any value of visible transmission, ultraviolet transmission, infrared transmission, and/or total solar energy transmission. By "float glass" is meant glass formed by a conventional float process in which molten glass is deposited onto a molten metal bath and controllably cooled to form a float glass ribbon. The ribbon is then cut and/or shaped and/or heat treated as desired. Examples of float glass processes are disclosed in U.S. Patent Nos. 4,466,562 and 4,671,155. The glass can be, for example, conventional soda-lime-silicate glass, borosilicate glass, or leaded glass. The glass can be "clear glass", i.e., non-tinted or non-colored glass. Alternatively, the glass can be tinted or otherwise colored glass. The glass can be untempered, heat treated, or heat strengthened glass. As used herein, the term "heat strengthened" means annealed, tempered, or at least partially tempered. Although not limiting to the invention, examples of glass suitable for the substrate 12 are described in U.S. Patent Nos. 4,746,347; 4,792,536; 5,240,886; 5,385,872; and 5,393,593. The substrate 12 can be of any desired dimensions, e.g., length, width, shape, or thickness. For conventional automotive transparencies, the substrate 12 can be up to 10 mm thick, e.g., 1 mm to 10 mm thick, e.g., less than 10 mm thick, e.g., 1 mm to 5 mm thick, e.g., 1.5 mm to 2.5 mm, e.g., 1.6 mm to 2.3 mm.

As shown in Fig. 1, the coating 14 is a multi-layered coating or coating stack. As used herein, the terms "coating" or "coating stack" mean having one or more coating layers. A "layer" can include one or more coating films. As used herein, the term "film" refers to a coating region of a desired or selected coating composition. Typically, the coating composition within a coating film is of a substantially uniform composition. The coating 14 can be a solar control coating, such as but not limited to a low emissivity coating. As used herein, the term "solar control coating" refers to a coating which affects the solar properties of the coated article, such as but not limited to shading coefficient and/or emissivity and/or the amount of solar radiation reflected by and/or absorbed by and/or transmitted through the coated article, e.g., infrared or ultraviolet absorption or reflection. The solar control coating can block, absorb, or filter selected portions of the solar spectrum, such as but not limited to the visible spectrum.

The coating 14 of the invention can be deposited over the substrate 12 by any conventional method, such as but not limited to spray pyrolysis, chemical vapor deposition (CVD), sol-gel, electron beam evaporation, or vacuum sputtering such as magnetron sputter vapor deposition (MSVD). In one embodiment, the coating 14 is deposited by MSVD. Examples of MSVD coating devices and methods will be well understood by one of ordinary skill in the art and are described, for example, in U.S. Patent Nos. 4,379,040; 4,861,669; 4,898,789; 4,898,790; 4,900,633; 4,920,006; 4,938,857; 5,328,768; and 5,492,750. In the MSVD method, an oxide of a metal or metal alloy can be deposited by sputtering a metal or metal alloy containing cathode in an oxygen containing atmosphere to deposit a metal oxide or metal alloy oxide film on the surface of the substrate.

The coating 14 includes a base layer or first anti-reflective layer 16 deposited over at least a portion of a major surface of the substrate 12. The first anti-reflective layer 16 comprises films of dielectric materials or anti-reflective materials selected from oxides of zinc and oxides containing zinc and tin (zinc stannate). Anti-reflective layers which can be a substantially single phase film, such as a metal alloy oxide film, e.g., zinc stannate, or may be a mixture of phases composed of zinc and tin oxides or may be composed of a plurality of metal oxide films are disclosed in U.S. Patent Nos. 5,821,001; 4,898,789; and 4,898,790.

In the illustrated embodiment, the first anti-reflective layer 16 comprises a multi-film structure having a first metal alloy oxide film 20 deposited over at least a portion of the major surface of the substrate 12 and a second metal oxide film 22 deposited over the first metal alloy oxide film 20. In one embodiment, the first anti-reflective layer 16 can have a total thickness of less than or equal to 500 10⁻¹⁰m (Å), e.g., less than or equal to 300 10⁻¹⁰m (Å), e.g., less than or equal to 280 10⁻¹⁰m (Å). The metal alloy oxide containing film 20 has a thickness in the range of 100 10⁻¹⁰m (Å) to 500 10⁻¹⁰m (Å) such as 150 10⁻¹⁰m (Å) to 400 10⁻¹⁰m (Å) e.g., 200 10⁻¹⁰m (Å) to 250 10⁻¹⁰m (Å). The metal oxide film 22 has a thickness in the range of 50 10⁻¹⁰m (Å) to 200 10⁻¹⁰m (Å), such as 75 10⁻¹⁰m (Å) to 150 10⁻¹⁰m (A), e.g., 100 10⁻¹⁰m (Å). The metal mixture or alloy oxide containing film is a zinc/tin alloy oxide. The zinc/tin alloy oxide can be obtained from magnetron sputtering vacuum deposition from a cathode of zinc and tin that can comprise zinc and tin in proportions of 10 wt.% to 90 wt.% zinc and 90 wt.% to 10 wt.% tin. The metal alloy oxide which is present in the film for use in the invention is zinc stannate. By "zinc stannate" is meant a composition of ZnₓSn₁₋ₓO₂₋ₓ (Formula 1) where x is greater than 0 and can be any fraction or decimal between greater than 0 to the number 1. For example where x=2/3 Formula 1 is Zn_{2/3}Sn_{1/3}O_{4/3} which is more commonly described as "Zn₂SnO₄". A zinc stannate containing film has one or more of the forms of Formula 1 in a predominant amount in the film. The metal oxide film is zinc oxide. The zinc oxide film can include other materials to improve the sputtering characteristics of the associated cathode, e.g., the zinc oxide can contain 0 to 20 wt.% tin, e.g., 0 to 15 wt.% tin, e.g., 0 to 10 wt.% tin.

A first infrared (IR) reflective film 24 is deposited over the first anti-reflective layer 16. IR reflective metals include gold, copper, silver, or mixtures, alloys, or combinations thereof. The first IR reflective film 24 has a thickness in the range of 25 10⁻¹⁰m (Å) to 300 10⁻¹⁰m (Å) e.g., 50 10⁻¹⁰m (Å) to 300 10⁻¹⁰m (Å) e.g., 50 10⁻¹⁰m (Å) to 150 10⁻¹⁰m (Å), such as 70 to 110 10⁻¹⁰m (Å) like 75 10⁻¹⁰m (Å) to 100 10⁻¹⁰m (Å), e.g., 80 10⁻¹⁰m (A). The first infrared reflective film 24 comprises silver.

A first primer film 26 is deposited over the first IR reflective film 24. The first primer film 26 is an oxygen capturing material, which is titanium, that can be sacrificial during the deposition process to prevent degradation of the first IR reflective film 24 during a sputtering process. The oxygen capturing material can be chosen to oxidize before the material of the IR reflectance film. The first primer film 26 has a thickness in the range of 5 10⁻¹⁰m (Å) to 50 10⁻¹⁰m (Å) e.g., 10 10⁻¹⁰m (Å) to 40 10⁻¹⁰m (Å) e.g., 12 10⁻¹⁰ m (Å) to 20 10⁻¹⁰m (Å).

A second anti-reflective layer 30 is deposited over the first primer film 26. The second anti-reflective layer 30 comprises metal oxide or metal alloy oxide containing films, as described above with respect to the first anti-reflective layer 16. The second anti-reflective layer 30 has a first metal oxide film 32, which is zinc oxide, deposited over the first primer film 26. A second metal alloy oxide film 34, which is a zinc stannate film, is deposited over the first zinc oxide film 32. A third metal oxide film 36, which is another zinc oxide film, is deposited over the zinc stannate film 34 to form the multi-film layer 30. Each metal oxide film 32, 36 of the second anti-reflective laver 30 has a thickness in the range of about 50 10⁻¹⁰m (Å) to 200 10⁻¹⁰m (Å) e.g., 75 10⁻¹⁰m (Å) to 150 10⁻¹⁰m (Å), e.g., 100 10⁻¹⁰m (Å). The metal alloy oxide film 34 has a thickness in the range of 100 10⁻¹⁰m (Å) to 500 10⁻¹⁰m (Å), e.g., 200 10⁻¹⁰m (Å) to 500 10⁻¹⁰m (Å) e.g., 300 10⁻¹⁰m (Å) to 500 10⁻¹⁰m (Å) e.g., 400 10⁻¹⁰m (Å).

A second IR reflective film 40 is deposited over the second anti-reflective layer 30. The second IR reflective film 40 includes the IR reflective material as described above with respect to the first IR reflective film 24. The second IR reflective film 40 has a thickness in the range of 25 10⁻¹⁰m (Å) to 150 10⁻¹⁰m (Å) e.g., 50 10⁻¹⁰m (Å) to 100 10⁻¹⁰m (Å) e.g., 80 10⁻¹⁰m (Å) to 90 10⁻¹⁰m (Å). The second IR reflective film 40 includes silver. In another embodiment this second infrared reflecting film can be thicker than each of the first and third infrared reflecting films.

A second primer film 42 is deposited over the second IR reflective film 40. The second primer film 42 is of the material described above with respect to the first primer film 26. The second primer film has a thickness in the range of about 5 10⁻¹⁰m (Å) to 50 10⁻¹⁰m (Å), e.g., 10 10⁻¹⁰m (Å) to 25 10⁻¹⁰m (Å), e.g., 12 10⁻¹⁰m (Å) to 20 10⁻¹⁰m (Å). The second primer film 42 includes titanium.

A third anti-reflective layer 46 is deposited over the second primer film 42. The third anti-reflective layer 46 includes the metal oxide or metal alloy oxide containing films as discussed above with respect to the first and second anti-reflective layers 16, 30. The third anti-reflective layer 46 is a multi-film layer similar to the second anti-reflective layer 30. The third anti-reflective layer 46 includes a first metal oxide film 48, which is a zinc oxide film, a second metal alloy oxide containing film 50, which is a zinc stannate film, deposited over the zinc oxide film 48, and a third metal oxide film 52, which is another zinc oxide film, deposited over the zinc stannate containing film 50. The metal oxide films have thicknesses in the range of 50 10⁻¹⁰m (Å) to 200 10⁻¹⁰m (Å) such as 75 10⁻¹⁰m (Å) to 150 10⁻¹⁰m (Å) e.g., 100 10⁻¹⁰m (Å). The metal alloy oxide film has a thickness in the range of 100 10⁻¹⁰m (Å) to 500 10⁻¹⁰m (Å) e.g., 200 10⁻¹⁰m (Å) to 500 10⁻¹⁰m (Å) e.g., 300 10⁻¹⁰m (Å) to 500 (Å) e.g., 400 10⁻¹⁰m (Å).

Unlike conventional solar control coatings, the coating stack of the invention further includes a third IR reflective film 58 deposited over the third anti-reflective layer 46. The third IR reflective film 58 is of any of the materials discussed above with respect to the first and second IR reflective films 24, 40. The third IR reflective film 58 has a thickness in the range of 50 10⁻¹⁰m (Å) to 100 10⁻¹⁰m (Å), e.g., 70 10⁻¹⁰m (Å) to 90 10⁻¹⁰m (Å) e.g., 75 10⁻¹⁰m (Å) to 85 10⁻¹⁰m (Å). The third IR reflective film 58 includes silver. The first, second, and third infrared reflective film has or contains silver. The total amount of silver for the coating can range in the amount of 29 to 44 micrograms per centimeter² (µg/cm²) and in one embodiment around 36.5 µg/cm².

A third primer film 60 is deposited over the third infrared reflective film 58. The third primer film 60 is of the primer material described above. The third primer film 60 has a thickness in the range of 5 10⁻¹⁰m (Å) to 50 10⁻¹⁰m (Å), e.g., 10 10⁻¹⁰m (Å) to 25 10-¹⁰m (Å), e.g., 12 10⁻¹⁰m (Å) to 20 10⁻¹⁰m (Å). The third primer film 60 is titanium.

A fourth anti-reflective layer 66 is deposited over the third primer film 60. The fourth anti-reflective layer 66 comprises the metal oxide or metal alloy oxide containing films as discussed above with respect to the first, second, or third anti-reflective layers 16, 30, 46. The fourth anti-reflective layer 66 is a multi-film layer having a first metal oxide film 68, which is a zinc oxide film, deposited over the third primer film 60 and a second metal alloy oxide film 70, which is a zinc stannate film, deposited over the zinc oxide film 68. The metal oxide film has a thickness in the range of 25 10⁻¹⁰m (Å) to 200 10⁻¹⁰m (Å), such as 50 10⁻¹⁰m (Å) to 150 10⁻¹⁰m (Å), such as 100 10⁻¹⁰m (Å). The metal alloy oxide film 70 has a thickness in the range of 25 10⁻¹⁰m (Å) to 500 10⁻¹⁰m (Å), e.g., 50 10⁻¹⁰m (Å) to 250 10⁻¹⁰m (Å), e.g., 100 10⁻¹⁰m (Å) to 150 10⁻¹⁰m (Å).

A protective overcoat 74 is deposited over the fourth anti-reflective layer 66 to assist in providing protection against mechanical and chemical attack. In one embodiment, the protective overcoat 74 can be a metal oxide, such as titanium dioxide or zirconium oxide, having a thickness in the range of about 25 10⁻¹⁰m (Å) to 100 10⁻¹⁰m (Å), e.g., 40 10⁻¹⁰m (Å) to 60 10⁻¹⁰m (Å), e.g., 50 10⁻¹⁰m (Å). In another embodiment, the protective overcoat 74 can be titanium metal having a thickness in the range of 10 10⁻¹⁰m (Å) to 100 10⁻¹⁰m (Å), e.g., 25 10⁻¹⁰m (Å) to 75 10⁻¹⁰m (Å) e.g., 50 10⁻¹⁰m (Å). In a still further embodiment, an outer coating (not shown), such as an oxide, nitride, or oxynitride of silicon, or mixtures thereof, can be deposited over the protective overcoat 74 or in lieu thereof. For example, the outer coating can include dopants, such as oxides, nitrides, or oxynitrides of silicon doped with one or more of aluminum or boron. Examples of some suitable protective coatings are disclosed in U.S. Patent Nos. 4,716,086; 4,786,563; 4,861,669; 4,938,857; and 4,920,006; Canadian Application No. CA 2,156,571, and U.S. Patent Application Nos. 60/242, 593 and 10/007,382 .

As will be appreciated by one skilled in the art, the coating 14 of the invention can be utilized in both laminated and non-laminated, e.g., single ply, articles. Fig. 1 shows a monolithic article having a coating 14 of the invention. By "monolithic" is meant having a single structural substrate 12 or primary ply, e.g., a glass ply. By "primary ply" is meant a primary support or structural member. The article can be a vehicle (e.g., automotive or aircraft) transparency. As used herein, the term "automotive transparency" refers to an automotive windshield, sidelight, back light, moon roof, sunroof, and the like. The "transparency" can have a visible light transmission (Lta) of any desired amount, e.g., greater than 0% to 100%. For vision areas, the visible light transmission can be greater than or equal to 50%, e.g., greater than or equal to 60%, e.g., greater than or equal to 70%, e.g., greater than or equal to 72%, e.g., greater than or equal to 75%. Alternatively, the article can be a conventional architectural transparency, such as but not limited to one or more panes of an insulating glass unit, a residential or commercial single pane or laminated window, a skylight, etc.

While the protective overcoat 74 can be of any thickness, for monolithic articles the protective overcoat 74 can have a thickness of 1 µm or more to reduce or prevent color variation in the appearance of the article. The protective overcoat 74 can have a thickness of less than or equal to 5 µm, e.g., about 1 to about 3 µm. For automotive use, the protective overcoat 74 can be sufficiently thick to pass the conventional ANSI/SAE 26.1-1996 test with less than 2% gloss loss over 1000 revolutions in order to be used as an automotive transparency. Further, the protective overcoat 74 need not be of uniform thickness but may have high and low spots or areas, such as when the refractive index of the coating is the same or close to the reflective index of the material to which it is laminated.

The protective overcoat 74 can be of any desired material. For instance the protective overcoat 74 can include one or more metal oxide materials, such as but not limited to, aluminum oxide, silicon oxide, or mixtures thereof as one or more films or layers such as one or more of the aforelisted metal oxides can be in one film and another film above the former film and can have another of the listed metal oxides or different mixture of them. For example, the protective overcoat 74 can be in the range of 35 weight percent (wt.%) to 100 wt.% alumina and 65 wt.% to 0 wt.% silica, e.g., 70 wt.% to 90 wt.% alumina and 10 wt.% to 30 wt.% silica, e.g., 75 wt.% to 85 wt.% alumina and 15 wt.% to 25 wt.% of silica, e.g., 88 wt.% alumina and 12 wt.% silica, e.g., 65 wt.% to 75 wt.% alumina and 25 wt.% to 35 wt.% silica, e.g., 70 wt.% alumina and 30 wt.% silica. Other materials, such as aluminum, chromium, hafnium, yttrium, nickel, boron, phosphorous, titanium, zirconium, and oxides thereof, can be present to affect the refractive index of the protective overcoat 74. Such a protective overcoat 74 can be a multilayered film of one or more films of one or more of the aforelisted metal oxides under a titanium or titania protective films. The protective overcoat 74 can have an index of refraction that is about the same as that of the substrate 12. For example, if the substrate 12 is glass having an index of refraction of 1.5, the protective overcoat 74 can have an index of refraction of less than 2, such as 1.3 to 1.8, e.g., 1.5 ± 0.2. The overcoat described above for 74 is useful for monolithic articles.

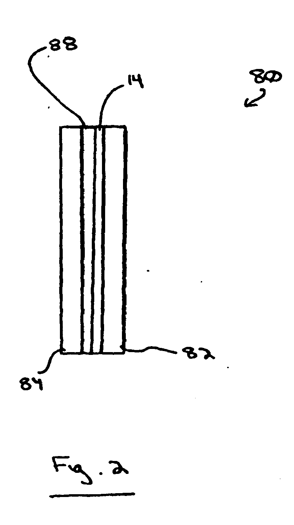

As will be appreciated by one of ordinary skill in the art, the use of a coating 14 of the invention is not limited to monolithic articles as shown in Fig. 1. For example, Fig. 2 shows a laminated article 80 having a first ply 82 and a second ply 84. The first and second plies 82, 84 can be of any desired material, such as those described for the substrate 12 discussed above. Moreover, the first ply 82 can be of a different material and/or of a different transmittance than the second ply 84. The laminated article 80 can be curved.

A coating 14 of the invention is located between the first and second plies 82, 84. For example, the coating 14 can be deposited on a major surface of one of the plies, e.g., the first ply 82.

The first and second plies 82, 84 can be laminated together by an interlayer 88. The interlayer 88 can be of any conventional laminating material, such as plastic materials conventionally utilized in the automotive arts such as for a non-exclusive example poly(vinylbutryal) in either a plasticized or non-plasticized version. In one embodiment, the laminated article 80 can be a laminated automotive transparency, such as a laminated windshield.

The substrate 12 can be heated before, during, or after application of the coating 14. For example, the substrate 12 can be bent or shaped into any desired shape, such as a curved ply, by conventional shaping devices and then the coating 14 applied to one or more major surfaces of the curved substrate 12. After application of the coating 14, the resultant coated article could then be heated or processed, such as for lamination or heat treatment.

In one embodiment of the invention, after application of the coating 14 onto the substrate 12, the resultant coated article can be subjected to a process for increasing the conductivity of the IR reflective films. For example, the coating 14 and/or substrate 12 can be heated to a temperature sufficient to provide a sheet resistance of each IR reflective film in the range of 1.5 to 3.5 ohms/square (Ω/□). For example, the coating 14 can be heated to a temperature greater than or equal to 225°F (107°C), e.g., greater than or equal to 250°F (121°C), e.g., greater than or equal to 350°F (176°C), e.g., greater than or equal to 350°C.

In one embodiment, the coated article 10 having a substrate 12 of clear float glass (2.3 mm thick) with a coating 14 of the invention deposited thereon can have a visible light transmittance (Lta) of greater than or equal to 60%, e.g., greater than or equal to 70%, e.g., greater than or equal to 72%, e.g., greater than or equal to 75%.

The coating 14 has a lower total solar energy reflectance (TSER) than known solar control coatings. For example, the coating 14 can have a TSER of 20% to 50% (using a trapezoidal integration method) over the range of 300 nm to 2150 nm. Moreover, the coating 14 can have a lower visible light reflectance than known solar control coatings. As used herein, the term "visible light reflectance" refers to the reflectance value "Y" using a D65 illuminant. For example, the visible light reflectance of the coating 14 can be less than or equal to 5% above the visible light reflectance of the substrate upon which it is deposited. By "less than or equal to 5% above the visible light reflectance of the substrate" is meant that if the substrate without the coating has a visible light reflectance of 10%, the coated article will have a visible light reflectance of less than or equal to 15%. In one embodiment, the coating 14 can have a visible light reflectance less than or equal to 2%, e.g., less than or equal to 1%, above the substrate without the coating.

The coating has a relatively neutral color as defined using conventional CIE color coordinates. By "neutral color" is meant having an a* and b* of less than or equal to ± |3|, such as less than or equal to ± |2|, and an L* of less than or equal to 50, e.g., less than or equal to 44, e.g., less than or equal to 40, e.g., less than or equal to 36, e.g., less than or equal to 35, such as less than or equal to 33. Additionally, the coating 14 can have a low angular color shift. By "low angular color shift" is meant that when the coating is viewed at an angle from perpendicular, the observed color of the coating remains within the neutral color area described above.

## Claims

1. A transparent substrate having a transmittance of visible light with a wavelength in the range of 390 to 800 nm of greater than 0% up to 100% containing a coating, comprising:
a first anti-reflective layer, wherein the first anti-reflective layer comprises a zinc oxide film deposited over a zinc stannate film and the zinc oxide film has a thickness in the range of 50 x 10⁻¹⁰m (Å) to 200 x 10⁻¹⁰m (Å) and the zinc stannate film has a thickness in the range of 100 x 10⁻¹⁰m (Å) to 500 x 10⁻¹⁰m (Å),
a first infrared reflective film having a thickness of 25 x 10⁻¹⁰m (Å) to 300 x 10⁻¹⁰m (Å) deposited over the first anti-reflective layer;
a first primer film of titanium deposited over the first infrared reflective film;
a second anti-reflective layer deposited over the first primer film, wherein the second anti-reflective layer comprises a first zinc oxide film, a zinc stannate film deposited over the first zinc oxide film, and a second zinc oxide film deposited over the zinc stannate film wherein the first zinc oxide film has a thickness in the range of 50 x 10⁻¹⁰m (Å) to 200 x 10⁻¹⁰m (Å), the zinc stannate film has a thickness in the range of 100 x 10⁻¹⁰m (Å) to 500 x 10⁻¹⁰m (Å), and the second zinc oxide film has a thickness in the range of 50 x 10⁻¹⁰m (Å) to 200 x 10⁻¹⁰m (Å);
a second infrared reflective film having a thickness of 25 x 10⁻¹⁰m (Å) to 150 x 10⁻¹⁰m (Å) deposited over the second anti-reflective layer;
a second primer film including titanium deposited over the second infrared reflective film;
a third anti-reflective layer deposited over the second primer film, wherein the third anti-reflective layer comprises a first zinc oxide film, a zinc stannate film deposited over the first zinc oxide film, and a second zinc oxide film deposited over the zinc stannate film wherein the first zinc oxide film has a thickness in the range of 50 x 10⁻¹⁰m (Å) to 200 x 10⁻¹⁰m (Å) the zinc stannate film has a thickness in the range of 100 x 10⁻¹⁰m (Å) to 500 x 10⁻¹⁰m (Å), and the second zinc oxide film has a thickness in the range of 50 x 10⁻¹⁰m (Å) to 200 x 10⁻¹⁰m (Å);
a third infrared reflective film having a thickness in the range of 50 x 10⁻¹⁰m (A) to 100 x 10⁻¹⁰m (Å) deposited over the third anti-reflective layer,
a third primer film of titanium deposited over the third infrared reflective film;
a fourth anti-reflective layer deposited over the third primer film, wherein the fourth antireflective layer comprises a zinc stannate film deposited over a zinc oxide film and the zinc stannate film has a thickness in the range of 25 x 10⁻¹⁰m (Å) to 500 x 10⁻¹⁰m (Å), and the zinc oxide film has a thickness in the range of 25 x 10⁻¹⁰m (Å) to 200 x 10⁻¹⁰m and
a protective overcoat deposited over the fourth anti-reflective layer wherein the infrared reflective films include silver;
the primer films each have a thickness of 5 x 10⁻¹⁰m (Å) to 50 x 10⁻¹⁰m (Å) and the coating has an a* and b* less than or equal to ± |3| and an L* less than or equal to 50.

2. The substrate of claim 1, wherein the zinc oxide film in the first anti-reflective layer has a thickness in the range of 50 x 10⁻¹⁰m (Å) to 150 x 10⁻¹⁰m (Å).

3. The substrate of claim 1 wherein the zinc stannate film in the first anti-reflective layer has a thickness in the range of 150 x 10⁻¹⁰m (Å) to 500 x 10⁻¹⁰m (Å), preferably 150 x 10⁻¹⁰m (Å) to 300 x 10⁻¹⁰m (Å).

4. The substrate of claim 1, wherein the first zinc oxide film in the second and third antireflective layer has a thickness in the range of 50 x 10⁻¹⁰m (Å) to 150 x 10⁻¹⁰m (Å), the zinc stannate film has a thickness in the range of 200 x 10⁻¹⁰m (Å) to 500 x 10⁻¹⁰m (Å), and the second zinc oxide film has a thickness in the range of 50 x 10⁻¹⁰m (Å) to 150 x 10⁻¹⁰m (Å).

5. The substrate of claim 1, wherein the zinc stannate film in the fourth antireflective layer has a thickness in the range of 50 x 10⁻¹⁰m (Å) to 200 x 10⁻¹⁰m (Å), and the zinc oxide film has a thickness in the range of 50 x 10⁻¹⁰m (Å) to 150 x 10⁻¹⁰m

6. The substrate of claim 1, wherein the protective overcoat comprises at least one metal oxide selected from the group consisting of titanium oxide, aluminum oxide, silicon oxide, and mixtures thereof.

7. A method of coating a transparent substrate having a transmittance of visible light with a wavelength in the range of 390 to 800 nm of greater than 0% up to 100% comprising the steps of:
depositing a first anti-reflective layer over at least a portion of the substrate wherein the first anti-reflective layer comprises a zinc oxide film deposited over a zinc stannate film and the zinc oxide film has a thickness in the range of 50 x 10⁻¹⁰m (Å) to 200 x 10⁻¹⁰m (Å) and the zinc stannate film has a thickness in the range of 100 x 10⁻¹⁰m (Å) to 500 x 10⁻¹⁰m (Å);
depositing a first infrared reflective film in a thickness of 25 x 10⁻¹⁰m (Å) to 300 x 10⁻¹⁰m (Å) over the first anti-reflective layer;
depositing a first primer film of titanium over the first infrared reflective film;
depositing a second anti-reflective layer over the first primer film, wherein the second anti-reflective layer comprises a first zinc oxide film, a zinc stannate film deposited over the first zinc oxide film, and a second zinc oxide film deposited over the zinc stannate film wherein the first zinc oxide film has a thickness in the range of 50 x 10⁻¹⁰m (Å) to 200 x 10⁻¹⁰m (Å), the zinc stannate film has a thickness in the range of 100 x 10⁻¹⁰m (Å) to 500 x 10⁻¹⁰m (Å), and the second zinc oxide film has a thickness in the range of 50 x 10⁻¹⁰m (Å) to 200 x 10⁻¹⁰m (Å);
depositing a second infrared reflective film in a thickness of 25 x 10⁻¹⁰m (Å) to 150 x 10⁻¹⁰m (Å) over the second anti-reflective layer;
depositing a second primer film which includes titanium over the second infrared reflective film;
depositing a third anti-reflective layer over the second primer film, wherein the third anti-reflective layer comprises a first zinc oxide film, a zinc stannate film deposited over the first zinc oxide film, and a second zinc oxide film deposited over the zinc stannate film wherein the first zinc oxide film has a thickness in the range of 50 x 10⁻¹⁰m (Å) to 200 x 10⁻¹⁰m (Å) the zinc stannate film has a thickness in the range of 100 x 10⁻¹⁰m (Å) to 500 x 10⁻¹⁰m (Å), and the second zinc oxide film has a thickness in the range of 50 x 10⁻¹⁰m (Å) to 200 x 10⁻¹⁰m (Å);
depositing a third infrared reflective film in a thickness in the range of 50 x 10⁻¹⁰m (Å) to 100 x 10⁻¹⁰m (Å) over the third anti-reflective layer;
depositing a third primer film of titanium over the third infrared reflective film;
and depositing a fourth anti-reflective layer over the third primer film, wherein the fourth antireflective layer comprises a zinc stannate film deposited over a zinc oxide film and the zinc stannate film has a thickness in the range of 25 x 10⁻¹⁰m (Å) to 500 x 10⁻¹⁰m (Å), and the zinc oxide film has a thickness in the range of 25 x 10⁻¹⁰m (Å) to 200 x 10⁻¹⁰m; and
depositing a protective overcoat over the fourth anti-reflective lay wherein the infrared reflective films include silver, the primer films each have a thickness of 5 x 10⁻¹⁰m (Å) to 50 x 10⁻¹⁰m (Å) and the coating has an a* and b* less than or equal to ± |3| and an L* less than or equal to 50.

8. A coated article, comprising a substrate and a coating according to any of claims 1-6.

## Patentansprüche

1. Transparentes Substrat mit einer Durchlässigkeit für sichtbares Licht mit einer Wellenlänge im Bereich von 390 bis 800 nm von größer als 0% bis zu 100%, das eine Beschichtung aufweist, umfassend:
eine erste antireflektierende Schicht, wobei die erste antireflektierende Schicht einen Zinkoxidfilm umfasst, der auf einem Zinkstannatfilm abgeschieden ist und der Zinkoxidfilm eine Dicke im Bereich von 50 x 10⁻¹⁰ m (Å) bis 200 x 10⁻¹⁰ m (Å) hat und der Zinkstannatfilm eine Dicke im Bereich von 100 x 10⁻¹⁰ m (Å) bis 500 x 10⁻¹⁰ m (Å) hat,
einen ersten infrarotreflektierenden Film mit einer Dicke von 25 x 10⁻¹⁰m (Å) bis 300 x 10⁻¹⁰m (Å), der auf der ersten antireflektierenden Schicht abgeschieden ist,
einen ersten Primer-Film aus Titan, der auf dem ersten infrarotreflektierenden Film abgeschieden ist,
eine zweite antireflektierende Schicht, die auf dem ersten Primer-Film abgeschieden ist, wobei die zweite antireflektierende Schicht einen ersten Zinkoxidfilm, einen Zinkstannatfilm, der auf dem ersten Zinkoxidfilm abgeschieden ist, und einen zweiten Zinkoxidfilm, der auf dem Zinkstannatfilm abgeschieden ist, umfasst, wobei der erste Zinkoxidfilm eine Dicke im Bereich von 50 x 10⁻¹⁰ m (Å) bis 200 x 10⁻¹⁰ m (Å) hat, der Zinkstannatfilm eine Dicke im Bereich von 100 x 10⁻¹⁰ m (Å) bis 500 x 10⁻¹⁰ m (Å) hat und der zweite Zinkoxidfilm eine Dicke im Bereich von 50 x 10⁻¹⁰ m (Å) bis 200 x 10⁻¹⁰ m (Å) hat,
einen zweiten infrarotreflektierenden Film mit einer Dicke von 25 x 10⁻¹⁰ m (Å) bis 150 x 10⁻¹⁰m (Å), der auf der zweiten antireflektierenden Schicht abgeschieden ist,
einen zweiten Primer-Film, der Titan beinhaltet und auf dem zweiten infrarotreflektierenden Film abgeschieden ist,
eine dritte antireflektierende Schicht, die auf dem zweiten Primer-Film abgeschieden ist, wobei die dritte antireflektierende Schicht einen ersten Zinkoxidfilm, einen Zinkstannatfilm, der auf dem ersten Zinkoxidfilm abgeschieden ist, und einen zweiten Zinkoxidfilm, der auf dem Zinkstannatfilm abgeschieden ist, umfasst, wobei der erste Zinkoxidfilm eine Dicke im Bereich von 50 x 10⁻¹⁰ m (Å) bis 200 x 10⁻¹⁰ m (Å) hat, der Zinkstannatfilm eine Dicke im Bereich von 100 x 10⁻¹⁰ m (Å) bis 500 x 10⁻¹⁰ m (Å) hat und der zweite Zinkoxidfilm eine Dicke im Bereich von 50 x 10⁻¹⁰ m (Å) bis 200 x 10⁻¹⁰ m (Å) hat,
einen dritten infrarotreflektierenden Film mit einer Dicke im Bereich von 50 x 10⁻¹⁰m (Å) bis 100 x 10⁻¹⁰m (Å), der auf der dritten antireflektierenden Schicht abgeschieden ist, einen dritten Primer-Film aus Titan, der auf dem dritten infrarotreflektierenden Film abgeschieden ist,
eine vierte antireflektierende Schicht, die auf dem dritten Primer-Film abgeschieden ist, wobei die vierte antireflektierende Schicht einen Zinkstannatfilm umfasst, der auf einem Zinkoxidfilm abgeschieden ist und
wobei der Zinkstannatfilm eine Dicke im Bereich von 25 x 10⁻¹⁰ m (Å) bis 500 x 10⁻¹⁰ m (Å) hat und der Zinkoxidfilm eine Dicke im Bereich von 25 x 10⁻¹⁰ m (Å) bis 200 x 10⁻¹⁰ m (Å) hat und
eine schützende Deckschicht, die auf der vierten antireflektierenden Schicht abgeschieden ist,
wobei die infrarotreflektierenden Filme Silber enthalten,
die Primer-Filme jeweils eine Dicke von 5 x 10⁻¹⁰ m (Å) bis 50 x 10⁻¹⁰ m (Å) haben und die Beschichtung ein a* und b* kleiner oder gleich ± |3| und ein L* kleiner oder gleich 50 aufweist.

2. Substrat nach Anspruch 1, wobei der Zinkoxidfilm in der ersten antireflektierenden Schicht eine Dicke im Bereich von 50 x 10⁻¹⁰m (Å) bis 150 x 10⁻¹⁰m (Å) aufweist.

3. Substrat nach Anspruch 1, wobei der Zinkstannatfilm in der ersten antireflektierenden Schicht eine Dicke im Bereich von 150 x 10⁻¹⁰m (Å) bis 500 x 10⁻¹⁰m (Å), vorzugsweise 150 x 10⁻¹⁰m (Å) bis 300 x 10⁻¹⁰m (Å) aufweist.

4. Substrat nach Anspruch 1, wobei der erste Zinkoxidfilm in der zweiten und dritten antireflektierenden Schicht eine Dicke im Bereich von 50 x 10⁻¹⁰m (Å) bis 150 x 10⁻¹⁰m (Å) aufweist, der Zinkstannatfilm eine Dicke im Bereich von 200 x 10⁻¹⁰m (Å) bis 500 x 10⁻¹⁰m (Å) aufweist und der zweite Zinkoxidfilm eine Dicke im Bereich von 50 x 10⁻¹⁰m (Å) bis 150 x 10⁻¹⁰m (Å) aufweist.

5. Substrat nach Anspruch 1, wobei der Zinkstannatfilm in der vierten antireflektierenden Schicht eine Dicke im Bereich von 50 x 10⁻¹⁰m (Å) bis 200 x 10⁻¹⁰m (Å) aufweist und der Zinkoxidfilm eine Dicke im Bereich von 50 x 10⁻¹⁰m (Å) bis 150 x 10⁻¹⁰m (Å) aufweist.

6. Substrat nach Anspruch 1, wobei die schützende Deckschicht wenigstens ein Metalloxid enthält, das ausgewählt ist aus der Gruppe bestehend aus Titanoxid, Aluminiumoxid, Siliciumoxid und Mischungen davon.

7. Verfahren zur Beschichtung eines transparenten Substrats mit einer Durchlässigkeit für sichtbares Licht mit einer Wellenlänge im Bereich von 390 bis 800 nm von größer als 0% bis zu 100% umfassend die Schritte:
Aufbringen einer ersten antireflektierenden Schicht auf wenigstens einem Teil des Substrats, wobei die erste antireflektierende Schicht einen Zinkoxidfilm umfasst, der auf einem Zinkstannatfilm abgeschieden ist und der Zinkoxidfilm eine Dicke im Bereich von 50 x 10⁻¹⁰ m (Å) bis 200 x 10⁻¹⁰ m (Å) hat und der Zinkstannatfilm eine Dicke im Bereich von 100 x 10⁻¹⁰ m (Å) bis 500 x 10⁻¹⁰ m (Å) hat,
Aufbringen eines ersten infrarotreflektierenden Films in einer Dicke von 25 x 10⁻¹⁰m (Å) bis 300 x 10⁻¹⁰m (Å) auf die erste antireflektierende Schicht, Aufbringen eines ersten Primer-Films aus Titan auf dem ersten infrarotreflektierenden Film,
Aufbringen einer zweiten antireflektierenden Schicht auf dem ersten Primer-Film, wobei die zweite antireflektierende Schicht einen ersten Zinkoxidfilm, einen Zinkstannatfilm, der auf dem ersten Zinkoxidfilm abgeschieden ist, und einen zweiten Zinkoxidfilm, der auf dem Zinkstannatfilm abgeschieden ist, umfasst, wobei der erste Zinkoxidfilm eine Dicke im Bereich von 50 x 10⁻¹⁰ m (Å) bis 200 x 10⁻¹⁰ m (Å) hat, der Zinkstannatfilm eine Dicke im Bereich von 100 x 10⁻¹⁰ m (Å) bis 500 x 10⁻¹⁰ m (Å) hat und der zweite Zinkoxidfilm eine Dicke im Bereich von 50 x 10⁻¹⁰ m (Å) bis 200 x 10⁻¹⁰ m (Å) hat,
Aufbringen eines zweiten infrarotreflektierenden Films in einer Dicke von 25 x 10⁻¹⁰m (Å) bis 150 x 10⁻¹⁰m (Å) auf der zweiten antireflektierenden Schicht,
Aufbringen eines zweiten Primer-Films, welcher Titan beinhaltet, auf dem zweiten infrarotreflektierenden Film,
Aufbringen einer dritten antireflektierenden Schicht auf dem zweiten Primer-Film, wobei die dritte antireflektierende Schicht einen ersten Zinkoxidfilm, einen Zinkstannatfilm, der auf dem ersten Zinkoxidfilm abgeschieden ist, und einen zweiten Zinkoxidfilm, der auf dem Zinkstannatfilm abgeschieden ist, umfasst, wobei der erste Zinkoxidfilm eine Dicke im Bereich von 50 x 10⁻¹⁰ m (Å) bis 200 x 10⁻¹⁰ m (Å) hat, der Zinkstannatfilm eine Dicke im Bereich von 100 x 10⁻¹⁰ m (Å) bis 500 x 10⁻¹⁰ m (Å) hat und der zweite Zinkoxidfilm eine Dicke im Bereich von 50 x 10-¹⁰ m (Å) bis 200 x 10⁻¹⁰ m (Å) hat,
Aufbringen eines dritten infrarotreflektierenden Films in einer Dicke im Bereich von 50 x 10⁻¹⁰m (Å) bis 100 x 10⁻¹⁰m (Å) auf der dritten antireflektierenden Schicht und
Aufbringen eines dritten Primer-Films aus Titan auf dem dritten infrarotreflektierenden Film und
Aufbringen einer vierten antireflektierenden Schicht auf dem dritten Primer-Film, wobei die vierte antireflektierende Schicht einen Zinkstannatfilm umfasst, der auf einem Zinkoxidfilm abgeschieden ist und wobei der Zinkstannatfilm eine Dicke im Bereich von 25 x 10⁻¹⁰ m (Å) bis 500 x 10⁻¹⁰ m (Å) hat und der Zinkoxidfilm eine Dicke im Bereich von 25 x 10⁻¹⁰ m (Å) bis 200 x 10⁻¹⁰ m (Å) hat und
Aufbringen einer schützenden Deckschicht auf der vierten antireflektierenden Schicht,
wobei die infrarotreflektierenden Filme Silber enthalten, die Primer-Filme jeweils eine Dicke von 5 x 10⁻¹⁰ m (Å) bis 50 x 10⁻¹⁰ m (Å) haben und die Beschichtung ein a* und b* kleiner oder gleich ± |3| und ein L* kleiner oder gleich 50 aufweist.

8. Ein beschichteter Gegenstand enthaltend ein Substrat und eine Beschichtung gemäß einem der Ansprüche 1-6.

## Revendications

1. Substrat transparent ayant une transmittance de la lumière visible avec une longueur d'onde dans la plage de 390 à 800 nm de plus de 0 % jusqu'à 100 % contenant un revêtement, comprenant :
une première couche antireflet, dans lequel la première couche antireflet comprend un film d'oxyde de zinc déposé sur un film de stannate de zinc et le film d'oxyde de zinc a une épaisseur dans la plage de 50 x 10⁻¹⁰m (Å) à 200 x 10⁻¹⁰m (Å) et le film de stannate de zinc a une épaisseur dans la plage de 100 x 10⁻¹⁰ m (Å) à 500 x 10⁻¹⁰ m (Å) ;
un premier film réfléchissant les infrarouges ayant une épaisseur de 25 x 10⁻¹⁰ m (Å) à 300 x 10⁻¹⁰ m (Å) déposé sur la première couche antireflet ;
un premier film d'apprêt de titane déposé sur le premier film réfléchissant les infrarouges ;
une deuxième couche antireflet déposée sur le premier film d'apprêt, dans lequel la deuxième couche antireflet comprend un premier film d'oxyde de zinc, un film de stannate de zinc déposé sur le premier film d'oxyde de zinc, et un second film d'oxyde de zinc déposé sur le film de stannate de zinc, dans lequel le premier film d'oxyde de zinc a une épaisseur dans la plage de 50 x 10⁻¹⁰ m (Å) à 200 x 10⁻¹⁰ m (Å), le film de stannate de zinc a une épaisseur dans la plage de 100 x 10⁻¹⁰ m (Å) à 500 x 10⁻¹⁰ m (Å), et le second film d'oxyde de zinc a une épaisseur dans la plage de 50 x 10⁻¹⁰ m (Å) à 200 x 10⁻¹⁰ m (Å) ;
un deuxième film réfléchissant les infrarouges ayant une épaisseur de 25 x 10⁻¹⁰ m (Å) à 150 x 10⁻¹⁰ m (Å) déposé sur la deuxième couche antireflet ;
un deuxième film d'apprêt incluant du titane déposé sur le deuxième film réfléchissant les infrarouges ;
une troisième couche antireflet déposée sur le deuxième film d'apprêt, dans lequel la troisième couche antireflet comprend un premier film d'oxyde de zinc, un film de stannate de zinc déposé sur le premier film d'oxyde de zinc, et un second film d'oxyde de zinc déposé sur le film de stannate de zinc, dans lequel le premier film d'oxyde de zinc a une épaisseur dans la plage de 50 x 10⁻¹⁰ m (Å) à 200 x 10⁻¹⁰ m (Å), le film de stannate de zinc a une épaisseur dans la plage de 100 x 10^{- 10} m (Å) à 500 x 10⁻¹⁰ m (Å), et le second film d'oxyde de zinc a une épaisseur dans la plage de 50 x 10⁻¹⁰ m (Å) à 200 x 10⁻¹⁰ m (Å) ;
un troisième film réfléchissant les infrarouges ayant une épaisseur dans la plage de 50 x 10⁻¹⁰ m (Å) à 100 x 10⁻¹⁰ m (Å) déposé sur la troisième couche antireflet ;
un troisième film d'apprêt de titane déposé sur le troisième film réfléchissant les infrarouges ;
une quatrième couche antireflet déposée sur le troisième film d'apprêt, dans lequel la quatrième couche antireflet comprend un film de stannate de zinc déposé sur un film d'oxyde de zinc, et le film de stannate de zinc a une épaisseur dans la plage de 25 x 10⁻⁰ m (Å) à 500 x 10⁻¹⁰ m (Å), et le film d'oxyde de zinc a une épaisseur dans la plage de 25 x 10⁻¹⁰ m (Å) à 200 x 10⁻¹⁰ m ; et
une surcouche protectrice déposée sur la quatrième couche antireflet,
dans laquelle les films réfléchissant les infrarouges incluent de l'argent ;
les films d'apprêt ont chacun une épaisseur de 5 x 10⁻¹⁰ m (Å) à 50 x 10⁻¹⁰ m (Å), et le revêtement a un a* et b* inférieurs ou égaux à ± |3| et un L* inférieur ou égal à 50.

2. Substrat selon la revendication 1, dans lequel le film d'oxyde de zinc dans la première couche antireflet a une épaisseur dans la plage de 50 x 10⁻¹⁰ m (Å) à 150 x 10⁻¹⁰ m (Å).

3. Substrat selon la revendication 1, dans lequel le film de stannate de zinc dans la première couche antireflet a une épaisseur dans la plage de 150 x 10⁻¹⁰ m (Å) à 500 x 10⁻¹⁰ m (Å), de préférence 150 x 10⁻¹⁰ m (Å) à 300 x 10⁻¹⁰ m (Å).

4. Substrat selon la revendication 1, dans lequel le premier film d'oxyde de zinc dans la deuxième et la troisième couche antireflet a une épaisseur dans la plage de 50 x 10⁻¹⁰ m (Å) à 150 x 10⁻¹⁰ m (Å), le film de stannate de zinc a une épaisseur dans la plage de 200 x 10⁻¹⁰ m (Å) à 500 x 10⁻¹⁰ m (Å), et le deuxième film d'oxyde de zinc a une épaisseur dans la plage de 50 x 10⁻¹⁰ m (Å) à 150 x 10⁻¹⁰ m (Å).

5. Substrat selon la revendication 1, dans lequel le film de stannate de zinc dans la quatrième couche antireflet a une épaisseur dans la plage de 50 x 10⁻¹⁰ m (Å) à 200 x 10⁻¹⁰ m (Å), et le film d'oxyde de zinc a une épaisseur dans la plage de 50 x 10⁻¹⁰ m (Å) à 150 x 10⁻¹⁰ m.

6. Substrat selon la revendication 1, dans lequel la surcouche protectrice comprend au moins un oxyde de métal choisi dans le groupe constitué par l'oxyde de titane, l'oxyde d'aluminium, l'oxyde de silicium et leurs mélanges.

7. Procédé de revêtement d'un substrat transparent ayant une transmittance de la lumière visible avec une longueur d'onde dans la plage de 390 à 800 nm de plus de 0 % jusqu'à 100 % comprenant les étapes de :
dépôt d'une première couche antireflet sur au moins une partie du substrat, dans lequel la première couche antireflet comprend un film d'oxyde de zinc déposé sur un film de stannate de zinc et le film d'oxyde de zinc a une épaisseur dans la plage de 50 x 10⁻¹⁰ m (Å) à 200 x 10⁻¹⁰ m (Å) et le film de stannate de zinc a une épaisseur dans la plage de 100 x 10⁻¹⁰ m (Å) à 500 x 10⁻¹⁰ m (Å) ;
dépôt d'un premier film réfléchissant les infrarouges à une épaisseur de 25 x 10⁻¹⁰ m (Å) à 300 x 10⁻¹⁰ m (Å) sur la première couche antireflet ;
dépôt d'un premier film d'apprêt de titane sur le premier film réfléchissant les infrarouges ;
dépôt d'une deuxième couche antireflet sur le premier film d'apprêt, dans lequel la deuxième couche antireflet comprend un premier film d'oxyde de zinc, un film de stannate de zinc déposé sur le premier film d'oxyde de zinc, et un second film d'oxyde de zinc déposé sur le film de stannate de zinc, dans lequel le premier film d'oxyde de zinc a une épaisseur dans la plage de 50 x 10⁻¹⁰ m (Å) à 200 x 10⁻¹⁰ m (Å), le film de stannate de zinc a une épaisseur dans la plage de 100 x 10⁻¹⁰ m (Å) à 500 x 10⁻¹⁰ m (Å), et le second film d'oxyde de zinc a une épaisseur dans la plage de 50 x 10⁻¹⁰ m (Å) à 200 x 10⁻¹⁰ m (Å) ;
dépôt d'un deuxième film réfléchissant les infrarouges à une épaisseur de 25 x 10⁻¹⁰ m (Å) à 150 x 10⁻¹⁰ m (Å) sur la deuxième couche antireflet ;
dépôt d'un deuxième film d'apprêt qui inclut du titane sur le deuxième film réfléchissant les infrarouges ;
dépôt d'une troisième couche antireflet sur le deuxième film d'apprêt, dans lequel la troisième couche antireflet comprend un premier film d'oxyde de zinc, un film de stannate de zinc déposé sur le premier film d'oxyde de zinc, et un second film d'oxyde de zinc déposé sur le film de stannate de zinc, dans lequel le premier film d'oxyde de zinc a une épaisseur dans la plage de 50 x 10⁻¹⁰ m (Å) à 200 x 10^{- 10} m (Å), le film de stannate de zinc a une épaisseur dans la plage de 100 x 10⁻¹⁰ m (Å) à 500 x 10⁻¹⁰ m (Å), et le second film d'oxyde de zinc a une épaisseur dans la plage de 50 x 10⁻¹⁰ m (Å) à 200 x 10⁻¹⁰ m (Å) ;
dépôt d'un troisième film réfléchissant les infrarouges à une épaisseur dans la plage de 50 x 10⁻¹⁰ m (Å) à 100 x 10⁻¹⁰ m (Å) sur la troisième couche antireflet ;
dépôt d'un troisième film d'apprêt de titane sur le troisième film réfléchissant les infrarouges ;
et dépôt d'une quatrième couche antireflet sur le troisième film d'apprêt, dans lequel la quatrième couche antireflet comprend un film de stannate de zinc déposé sur un film d'oxyde de zinc, et le film de stannate de zinc a une épaisseur dans la plage de 25 x 10⁻¹⁰ m (Å) à 500 x 10⁻¹⁰ m (Å), et le film d'oxyde de zinc a une épaisseur dans la plage de 25 x 10⁻¹⁰ m (Å) à 200 x 10⁻¹⁰ m ; et
dépôt d'une surcouche protectrice sur la quatrième couche antireflet ;
dans lequel les films réfléchissant les infrarouges incluent de l'argent, les films d'apprêt ont chacun une épaisseur de 5 x 10⁻¹⁰ m (Å) à 50 x 10⁻¹⁰ m (Å) et le revêtement a un a* et un b* inférieurs ou égaux à ± |3| et un L* inférieur ou égal à 50.

8. Article revêtu, comprenant un substrat et un revêtement selon l'une quelconque des revendications 1 à 6.
